# EUROPÄISCHE PATENTSCHRIFT

(11) **EP 0 457 148 B1**
(45) Veröffentlichungstag und Bekanntmachung des Hinweises auf die Patenterteilung: **28.12.1994**
(21) Anmeldenummer: 91107300.5
(22) Anmeldetag: 06.05.1991
(51) Int. Cl.: F16K 29/02

(54) **Vorrichtung zur Volumen- und/oder Drucksteuerung mit einem Schaltschieber**
Device for flow and/or pressure control with a spool
Dispositif pour le réglage de débit et/ou de pression avec un tiroir

(30) Priorität: 18.05.1990 DE 4016068
(43) Veröffentlichungstag der Anmeldung: 21.11.1991
(73) Patentinhaber: Volkswagen Aktiengesellschaft, 38436 Wolfsburg (DE)
(72) Erfinder: Prüss, Ludwig, Dipl.-Ing., W-3300 Braunschweig (DE)

(56) Entgegenhaltungen:
- DE-U- 1 945 038
- FR-A- 1 038 055
- US-A- 3 051 191

## Beschreibung

Die Erfindung betrifft eine Vorrichtung zur Volumen- und/oder Drucksteuerung gemäß dem Oberbegriff des Patentanspruchs 1.

Durch hydraulische Systeme gesteuerte Schaltglieder benötigen einen bestimmten Arbeitsdruck bzw. ein bestimmtes Arbeitsvolumen. Dieses wird zugeführt bzw. geregelt über Schaltvorrichtungen, bei denen beispielsweise ein Schaltschieber in einem Gehäusekanal verschiebbar angeordnet ist und in Abhängigkeit von seiner axialen Position mit dem Gehäusekanal verbundene Leitungen abschließt oder offenhält. Bekannte Vorrichtungen dieser Art weisen als großen Nachteil den sogenannten Stick-and-Slip-Effekt auf. Der Schaltschieber liegt im Ruhezustand zumindest abschnittsweise an einer Innenwandung des Gehäusekanals an. Zu Beginn einer axialen Bewegung ist aufgrund der vorhandenen Haftreibung eine bestimmte Losbrechkraft erforderlich. Insbesondere bei Einbau der Vorrichtung in einen Regelkreis wird das Regelverhalten durch den beschriebenen Effekt nachteilig beeinflußt.

Zur Beseitigung dieser Schwierigkeiten bei der Überwindung der Ruhereibung wird in der gattungsbildenden DE-U-19 45 038 vorgeschlagen, den Schaltschieber durch gezielte Anströmung aus einer Druckleitung um seine Längsachse in Rotation zu versetzen. Zu diesem Zweck ist an einem Ende des Schaltschiebers eine Beschaufelung vorgesehen, die innerhalb einer Ventilkammer gezielt mit Druckmedium beaufschlagbar ist.

Der Erfindung liegt die Aufgabe zugrunde, für gattungsbildende Vorrichtungen die Betriebssicherheit zu erhöhen.

Diese Aufgabe wird gelöst durch die kennzeichnenden Merkmale des Patentanspruchs 1. Die Unteransprüche enthalten zweckmäßige Weiterbildungen der Erfindung.

Die Erhöhung der Betriebssicherheit erfolgt erfindungsgemäß dadurch, daß durch einen die Rotation des Schaltschiebers ermöglichenden Vorsteuerzulauf der Schaltschieber auch axial verstellbar ist. Diese axiale Verstellbarkeit wird begrenzt durch einen erfindungsgemäß vorgesehenen Ablauf, so daß mit der durch die Beschaufelung des Schaltschiebers erzeugten Rotation nach dem Stillstand der axialen Bewegung stets eine gute Durchspülung der die Beschaufelung aufnehmenden Innenkammer gewährleistet ist. Auf diese Weise wird verhindert, daß sich Schmutzpartikel in den Dichtspalten zwischen Schaltschieber und Ventilgehäuse festsetzen können. Darüber hinaus ermöglicht die erfindungsgemäße Kombination von Vorsteuerzulauf und Ablauf eine exakte und reibungsarme Begrenzung der Abwärtsbewegung des Schaltschiebers. Außerdem ergibt sich bei der erfindungsgemäß vorgeschlagenen Vorrichtung durch die Rotation des Schaltschiebers ein gleichmäßiger Dichtspalt, durch den zudem ein einseitiger Verschleiß des Schaltschiebers oder des Gehäusekanals vermieden wird.

Vorteilhafte Ausgestaltungen der Erfindung sind den Unteransprüchen zu entnehmen.

Eine Ausführungsform der Erfindung wird im folgenden anhand von Zeichnungen näher erläutert. Es zeigen:
- Figur 1:: eine erfindungsgemäße Vorrichtung mit einem in einem Gehäusekanal angeordneten Schaltschieber im Längsschnitt,
- Figur 2:: den Schaltschieher im Querschnitt gemäß Figur 1 entlang der Linie I-I.

Ein bevorzugtes Anwendungsgebiet der Erfindung liegt in der hydraulischen Steuerung von Schaltgliedern für automatische Getriebe, insbesondere von Kraftfahrzeugen.

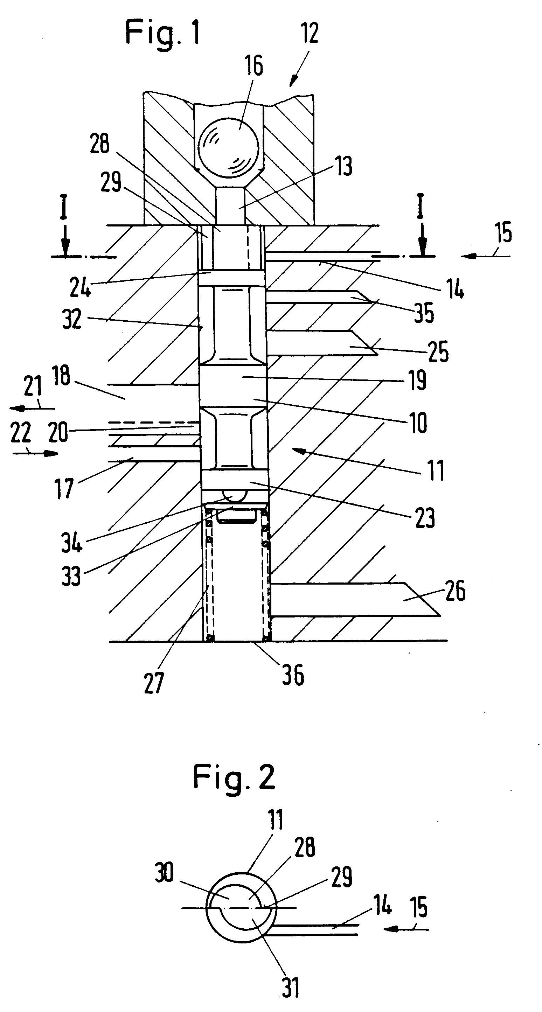

Gemäß Figur 1 ist ein Schaltschieber 10 in einem Gehäusekanal 11 axial verschiebbar angeordnet. Eine Verstellung des Schaltschiebers 10 erfolgt über ein elektromagnetisches Ventil 12, dessen Zulauf 13 in Fortsetzung des Gehäusekanals 11 und oberhalb desselben angeordnet ist. Eine in den Vorsteuerzulauf 14 in Richtung des Pfeils 15 einströmende Hydraulikflüssigkeit wird durch eine im elektromagnetischen Ventil 12 bewegliche Kugel 16 in ihrem Druck geregelt. Bei einer elektromagnetisch bewirkten Absenkung der Kugel 16 in Richtung des Schaltschiebers 10 erhöht sich der Druck innerhalb des Vorsteuerzulaufs 14 und der Schaltschieber 10 bewegt sich in axialer Richtung nach unten. Eine seitlich zu dem Gehäusekanal 11 hin führende Druckleitung 17 versorgt eine darüber angeordnete und von dem Gehäusekanal 11 wegführende Schaltgliedleitung 18. Die Durchflußmenge ist abhängig von der Position des Schaltschiebers 10. Dieser weist einen Steuerbund 19 auf, durch den die Schaltgliedleitung 18 während der Abwärtsbewegung des Schaltschiebers 10 verschließbar ist. Zur Erzielung einer optimalen Regelcharakteristik ist die Schaltgliedleitung 18 in ihrem unteren Bereich, das heißt dort, wo der Steuerbund 19 zunächst einen bestimmten Querschnitt freigibt, mit einer an sich bekannten Regelkante 20 versehen. Bei der in der Figur 1 gezeigten Position des Schaltschiebers 10 ergeben sich die durch die Pfeile 21, 22 dargestellten Strömungsrichtungen in den Leitungen 17, 18. Zur Abdichtung gegenüber dem Gehäusekanal 11 weist der Schaltschieber 10 noch einen unteren Steuerbund 23 sowie einen stets unterhalb des Vorsteuerzulaufes 14 liegenden oberen Steuerbund 24 auf.

Zwischen dem oberen Steuerbund 24 und dem Steuerbund 19, sowie unterhalb des unteren Steuerbundes 23 sind Rückführungsleitungen 25, 26 für eine Rückführung von Lecköl zu einem nicht gezeigten Hydrauliktank vorgesehen. Unterhalb des Schaltschiebers 10 ist im Gehäusekanal 11 eine Druckfeder 27 angeordnet, die dem den Schaltschieber 10 von oben beaufschlagenden Vorsteuerdruck entgegenwirkt.

Um ein Festsetzen des Schaltschiebers 10 zu vermeiden, ist dieser im Gehäusekanal 11 rotierend gelagert. Die Rotationsbewegung wird erzeugt durch das über den Vorsteuerzulauf 14 anströmende und über das elektromagnetische Ventil 12 abströmende Hydrauliköl in Verbindung mit einer besonderen Formgebung des Schiebers 10 im Bereich (Schaltschieberkopf 28) oberhalb des oberen Steuerbundes 24. Der Schaltschieberkopf 28 ist zu diesem Zweck mit einer Beschaufelung 29 versehen, die über die Anströmung aus dem Vorsteuerzulauf 14 den Schaltschieber 10 in Drehbewegung versetzt. Figur 2 zeigt einen Querschnitt der Beschaufelung 29. Dieser ergibt sich durch zwei längs ihres Halbmessers gegeneinander versetzte Halbkreise 30, 31. Die Rotation des Schaltschiebers 10 bewirkt insgesamt eine hydrodynamische Lagerung. Als Folge daraus wird der sogenannte Stick-and-Slip-Effekt vermieden und rundum ein gleichmäßiger Dichtspalt erzielt. Ein Festsetzen von Schmutzpartikeln zwischen dem Schaltschieber 10 und der Innenwandung 32 des Gehäusekanals 11 wird vermieden und einem einseitigen Gehäuseverschleiß wird vorgebeugt.

Der Schaltschieber 10 ist mit der Beschaufelung 29 einstückig ausgeführt. In einer weiteren vorteilhaften Ausführungsform ist die Beschaufelung 29 nach der Fertigung des Schaltschiebers 10 auf diesen aufgebracht, z.B. aufgeclipst. Die Beschaufelung 29 besteht dabei aus Blech oder Kunststoff. Schaltschieber und Beschaufelung sind so besonders günstig herstellbar.

Zur Verminderung entgegen der Rotation wirkender Kräfte drückt die Druckfeder 27 nicht unmittelbar gegen den unteren Steuerbund 23. Vielmehr ist in diesem Bereich eine Punktauflage vorgesehen, die durch eine gegen einen Federteller 33 drückende Halbkugel 34 unter dem unteren Steuerbund 23 erzielt wird.

Zur exakten und reibungsarmen Begrenzung der Abwärtsbewegung des Schaltschiebers 10 ist unterhalb des Vorsteuerzulaufs 14 ein Ablauf 35 vorgesehen. Sobald der obere Steuerbund 24 zumindest einen Teil des Querschnitts dieses Ablaufs 35 freigibt, geht auch der von oben auf den Schaltschieber 10 wirkende Druck zurück, so daß die Abwärtsbewegung gestoppt wird.

In einer nicht gezeigten Ausführungsform ist anstelle des Ablaufs 35 ein mit dem Federteller 3 verbundener Anschlag zur Hubbegrenzung des Schaltschiebers 10 vorgesehen. Der maximale Hub des Schaltschiebers 10 endet dann mit Anlage des Anschlags am unteren Ende 36 des Gehäusekanals 11.

Die beschriebene Beschaufelung 29 kann außerdem an weiteren angeströmten Bereichen des Schaltschiebers 10 vorgesehen sein, insbesondere zwischen dem unteren Steuerbund 23 und dem oberen Steuerbund 24 zur Anströmung durch die Druckleitung 17. Besonders vorteilhaft ist eine Zuführung des Hydrauliköls, bei der die entsprechende Leitung außermittig in den Gehäusekanal 11 hineingeführt wird. Gemäß Figur 2 ist der Vorsteuerzulauf 14 seitlich versetzt angeordnet, so daß die Strömungsenergie zur Erzeugung der Rotation vollständig genutzt werden kann. Bei einer Beschaufelung im Bereich unterhalb des Steuerbundes 19 wäre auch eine derart außermittige Zuführung der Druckleitung 17 zum Gehäusekanal 11 vorteilhaft.

| Bezugszeichenliste | | | |
|---|---|---|---|
| 10 | Schaltschieber | 33 | Federteller |
| 11 | Gehäusekanal | 34 | Halbkugel |
| 12 | Elektronisches Ventil | 35 | Ablauf |
| 13 | Zulauf | 36 | Ende |
| 14 | Vorsteuerzulauf | | |
| 15 | Pfeil | | |
| 16 | Kugel | | |
| 17 | Druckleitung | | |
| 18 | Schaltgliedleitung | | |
| 19 | Steuerbund | | |
| 20 | Regelkante | | |
| 21 | Pfeil | | |
| 22 | Pfeil | | |
| 23 | Unterer Steuerbund | | |
| 24 | Oberer Steuerbund | | |
| 25 | Rückführungsleitung | | |
| 26 | Rückführungsleitung | | |
| 27 | Druckfeder | | |
| 28 | Schaltschieberkopf | | |
| 29 | Beschaufelung | | |
| 30 | Halbkreis | | |
| 31 | Halbkreis | | |
| 32 | Innenwandung | | |

## Patentansprüche

1. Vorrichtung zur Volumen- und/oder Drucksteuerung, insbesondere zur Ansteuerung eines Schaltgliedes für ein Fahrzeuggetriebe, mit einem in einem Kanal (11) innerhalb eines Gehäuses axial verschiebbaren Schaltschieber (10) und zu dem Kanal (11) hinführenden bzw. von diesem wegführenden Druckleitungen (17, 18), von denen zumindest eine durch den im Kanal (11) um seine Längsachse rotierenden Schaltschieber (10) verschließbar ist, dadurch gekennzeichnet, daß der Schaltschieber (10) durch einen über einen Vorsteuerzulauf (14) an einem Ende des Kanals (11) zugeführten Vorsteuerdruck in axialer Richtung bewegbar ist, wobei zum Vorsteuerzulauf (14) in Richtung Gehäusemitte axial versetzt ein Ablauf (35) vorgesehen ist, durch den bei einer durchgängigen Verbindung zum Vorsteuerzulauf (14) eine Begrenzung der axialen Bewegung bewirkt wird.

2. Vorrichtung nach Anspruch 1, dadurch gekennzeichnet, daß der Schaltschieber (10) eine von einem Fluid anströmbare, eine Rotation bewirkende Formgebung, insbesondere eine Beschaufelung (29) aufweist.

3. Vorrichtung nach Anspruch 1 oder 2, dadurch gekennzeichnet, daß der Schaltschieber (10) in einem über einen Vorsteuerzulauf (14) zur Steuerung der Axialbewegung beaufschlagbaren Bereich (Schaltschieberkopf 28) eine Formgebung aufweist, durch die er mittels eines vorzugsweise radial bis tangential anströmenden und axial abströmenden Fluids in Rotation versetzbar ist.

4. Vorrichtung nach einem der Ansprüche 1 bis 3, dadurch gekennzeichnet, daß der Schaltschieber (10) in einem Bereich nahe der zum Gehäusekanal (11) hinführenden Druckleitung (17) eine Beschaufelung aufweist.

5. Vorrichtung nach einem der Ansprüche 1 bis 4, dadurch gekennzeichnet, daß der Schaltschieber (10) gegen den Vorsteuerdruck federnd gelagert ist, insbesondere durch punktuelle Anlage an einem Federmittel.

6. Vorrichtung nach einem der Ansprüche 1 bis 5, dadurch gekennzeichnet, daß der Schaltschieber (10) zusammen mit der Beschaufelung (29) einstückig ausgebildet ist.

7. Vorrichtung nach einem der Ansprüche 1 bis 5, dadurch gekennzeichnet, daß die Beschaufelung (29) auf dem Schaltschieber (10) aufgebracht, insbesondere aufgeclipst ist.

8. Vorrichtung nach Anspruch 7, dadurch gekennzeichnet, daß die Beschaufelung aus Blech oder Kunststoff gefertigt ist.

## Claims

1. A volume and/or pressure control device, in particular for controlling a connecting device for motor vehicle transmission, having a pilot valve (10) axially displaceable in a duct (11) inside a housing, and pressure lines (17, 18) leading to or away from the duct (11), of which at least one pressure line can be closed by the pilot valve (10) which rotates about its longitudinal axis in the duct (11), characterised in that the pilot valve (10) can be moved in the axial direction by a pilot pressure supplied by way of a pilot inlet (14) at one end of the duct (11), wherein, an outlet (35) is provided axially offset to the pilot inlet (14) in the direction of the centre of the housing, by which outlet, in the case of a through-going connection to the pilot inlet (14), a limiting of the axial movement is brought about.

2. A device according to claim 1, characterised in that the pilot valve (10) comprises a shaped structure, in particular in the form of blading (29), against which a fluid can flow to bring about a rotation of the pilot valve.

3. A device according to claim 1 or 2, characterised in that in a region (pilot valve head 28), which can be stressed by the pilot inlet (14) in order to control the axial movement, the pilot valve (10) is shaped so that it can be rotationally displaced by a fluid flowing preferably radially to, tangentially and axially.

4. A device according to any of claims 1 to 3, characterised in that in a region close to the pressure line (17) leading to the housing duct (11), the pilot valve (10) comprises blading.

5. A device according to any of claims 1 to 4, characterised in that the pilot valve (10) is mounted in a resilient manner against the pilot pressure, in particular by bearing at points against a resilient medium.

6. A device according to any of claim 1 to 5, characterised in that the pilot valve (10) is formed as one piece with the blading (29).

7. A device according to any of claims 1 to 5, characterised in that the blading (29) is provided on the pilot valve (10), in particular is clipped on.

8. A device according to claim 7, characterised in that the blading is made of sheet metal or a synthetic material.

## Revendications

1. Dispositif de régulation da volume et/ou de pression, notamment pour la commande d'un élément de commutation d'une transmission automobile, comprenant un tiroir (10) de commande coulissant axialement dans un canal (11) ménagé dans un carter et des conduites de pression (17, 18) arrivant au canal (11) et s'éloignant de celui-ci, l'une d'elles au moins pouvant être obturée par te tiroir (10) de commande tournant autour de son axe longitudinal à l'intérieur du canal (11),
caractérisé en ce que le tiroir (10) de commande peut être déplacé dans le sens axial au moyen d'une pression de pilotage acheminée vers une extrémité du canal (11) via une alimentation (14) de pilotage, un échappement (35) étant prévu de façon axialement décalée par rapport à l'alimentation (14) de pilotage dirigée vers le centre du carter, cet échappement définissant une limitation du mouvement axial dès qu'une liaison communicante existe entre l'échappement et l'alimentation (14) de pilotage.

2. Dispositif selon la revendication 1, caractérisé en ce que le tiroir (10) comporte une formation pouvant être soumise à un flux de fluide, provoquant une rotation, et comporte notamment des aubages (29).

3. Dispositif selon la revendication 1 ou 2, caractérisé en ce que le tiroir de commande (10) comporte une formation aménagée dans une zone (tête 28 du tiroir de commande) pouvant être commandée à travers une alimentation (14) de pilotage de manière à commander le déplacement axial, cette formation permettant de mettre le tiroir en rotation au moyen d'un fluide arrivant de préférence dans un sens radial ou tangentiel, et s'échappant dans le sens axial.

4. Dispositif selon l'une des revendications 1 à 3, caractérisé en ce que le tiroir (10) de commande comporte des aubages placés dans une zone située à proximité de la conduite de pression (17) arrivant au canal (11) du carter.

5. Dispositif selon l'une des revendications 1 à 4, caractérisé en ce que le tiroir (10) de commande est maintenu élastiquement à l'encontre de la pression de pilotage, notamment par l'intermédiaire d'un contact ponctuel avec un moyen à ressort.

6. Dispositif selon l'une des revendications 1 à 5, caractérisé en ce que le tiroir (10) de commande est réalisé d'un seul tenant avec les aubages (29).

7. Dispositif selon l'une des revendications 1 à 5, caractérisé en ce que les aubages (29) sont rapportés sur le tiroir (10) de commande, et sont notamment enclenchés sur celui-ci.

8. Dispositif selon la revendication 7, caractérisé en ce que les aubages sont réalisés en tôle ou en matière plastique.
